# EUROPEAN PATENT APPLICATION

(11) **EP 4 692 465 A1**
(43) Date of publication of application: **11.02.2026**
(21) Application number: 23930985.9
(22) Date of filing: 28.12.2023
(51) Int. Cl.: E02F 9/20, E02F 3/30, E02F 9/00

(54) **CONSTRUCTION MACHINE AND REMOTE-CONTROL SYSTEM**

(30) Priority: 31.03.2023 JP 2023058437
(71) Applicant: Hitachi Construction Machinery Co., Ltd., Tokyo 110-0015 (JP)
(72) Inventor: SATOU, Kei, Tsuchiura-shi, Ibaraki 300-0013 (JP); ITO, Hideaki, Tsuchiura-shi, Ibaraki 300-0013 (JP); ISHIMOTO, Hidefumi, Tsuchiura-shi, Ibaraki 300-0013 (JP); ISHII, Hirotake, Tokyo 100-8280 (JP); TAMAKI, Satoshi, Tokyo 100-8280 (JP)
(74) Representative: MERH-IP Matias Erny Reichl Hoffmann Patentanwälte PartG mbB
(86) International application number: PCT/JP2023/047304
(87) International publication number: WO 2024/202371

(57) **Abstract**

An hydraulic excavator 1 includes a machine body 10 including a lower traveling body 2, an upper rotating body 4 capable of rotating on the lower traveling body 2, and a work device 5 attached to a front central portion of the upper rotating body 4, and a plurality of machine body-side antennas 60 attached to the upper rotating body 4, and the hydraulic excavator 1 communicates between a radio wave tower-side antenna 70 arranged outside the machine body 10 and the plurality of machine body-side antennas 60. The plurality of machine body-side antennas 60 includes front antennas 61 provided at least one on each of right and left sides so as to sandwich the work device 5 in a right-left direction ahead of a rotating center 4a of the upper rotating body 4 in a front-rear direction of the machine body 10, and at least one rear antenna 62 provided behind the rotating center 4a in the front-rear direction.

## Description

### Technical Field

The present invention relates to a construction machine and a remote control system.

### Background Art

Conventionally, in order to make work at a work site safe and efficient, a technique of transmitting an operation signal corresponding to a situation of the work site to a construction machine and remotely controlling the construction machine is known. For example, Patent Document 1 describes a remote control system that matches a radiation direction of a radio wave from an antenna device mounted on a construction machine with a reception direction of a radio wave on a remote control room side according to a height difference between the construction machine and the remote control room, thereby extending a communication distance and suppressing interference.

### Prior Art Document

### Patent Document

Patent Document 1: Japanese Patent Laid-Open No. 2005-204256

### Summary of the Invention

### Problems to be solved by the Invention

The construction machine described in Patent Document 1 includes a lower traveling body, an upper rotating body provided on the lower traveling body so as to be rotatable, and a work device provided in a front central portion of the upper rotating body, and an antenna body is attached to the upper rotating body. However, in a case where the antenna body is attached to the upper rotating body as described above, there is a possibility that radio waves are shielded between the antenna body and an antenna on the remote control room side by the work device, and establishment of stable communication has been required.

The present invention has been made in view of such a problem, and an object of the present invention is to provide a construction machine and a remote control system capable of more favorably ensuring stability of communication regardless of a posture of a machine body and a work device.

### Means for Solving the Problems

To achieve the above-described object, a construction machine of the present invention comprise: a machine body including a lower traveling body, an upper rotating body capable of rotating on the lower traveling body, and a work device attached to a front central portion of the upper rotating body; and a plurality of machine body-side antennas attached to the upper rotating body, and the construction machine being configured to communicate between an external antenna arranged outside the machine body and the plurality of machine body-side antennas, wherein the plurality of machine body-side antennas includes front antennas provided at least one on each of right and left sides so as to sandwich the work device in a right-left direction of the machine body ahead of a rotating center of the upper rotating body in a front-rear direction of the machine body, and at least one rear antenna provided behind the rotating center in the front-rear direction.

To achieve the above-described object, a remote control system of the present invention comprise the construction machine and the external antenna arranged outside the machine body, and performs remote control of the construction machine by communicating between the external antenna and the plurality of machine body-side antennas.

### Advantageous Effects of the Invention

According to the construction machine and the remote control system of the present invention, it is possible to more favorably secure stability of communication.

### Brief Description of the Drawings

FIG. 1 is a side view illustrating an hydraulic excavator as a construction machine according to an embodiment.
FIG. 2 is a plan view illustrating the hydraulic excavator.
FIG. 3 is a perspective view illustrating the hydraulic excavator.
FIG. 4 is a schematic configuration diagram illustrating an example of a remote control system according to the embodiment.
FIG. 5 is an explanatory view illustrating regions of blind angles of radio waves transmitted and received by a plurality of machine body-side antennas.
FIG. 6 is an explanatory diagram illustrating regions of blind angles of radio waves transmitted and received by a plurality of machine body-side antennas in a case where a front antenna is arranged behind a rotating center as a comparative example.
FIG. 7 is an explanatory diagram illustrating regions of blind angles of radio waves transmitted and received by a plurality of machine body-side antennas in a case where a rear antenna is shifted in a right-left direction as compared with the example of Fig. 5 as a modification.
FIG. 8 is an explanatory view illustrating an arrangement configuration example in a case where the number of machine body-side antennas is four.

### Mode for Carrying out the Invention

Hereinafter, an embodiment of the present invention will be described with reference to the drawings. In the following description, a front-rear direction, a right-left direction, and an up-down direction of a construction machine and a machine body thereof are expressed mainly with respect to a driver in a case where the driver is on board the construction machine.

### (Construction Machine: Hydraulic excavator)

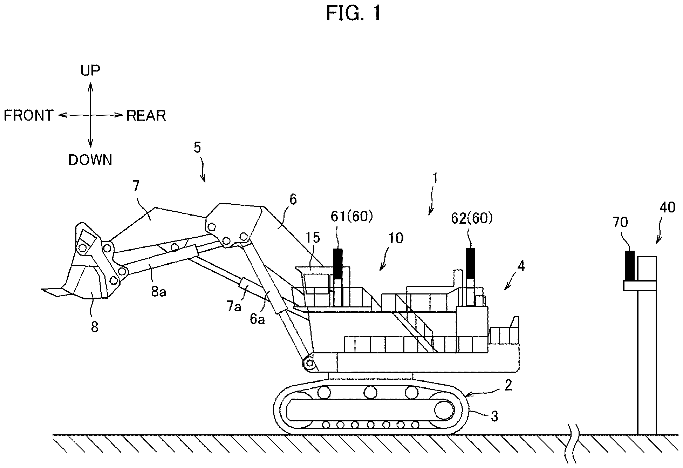

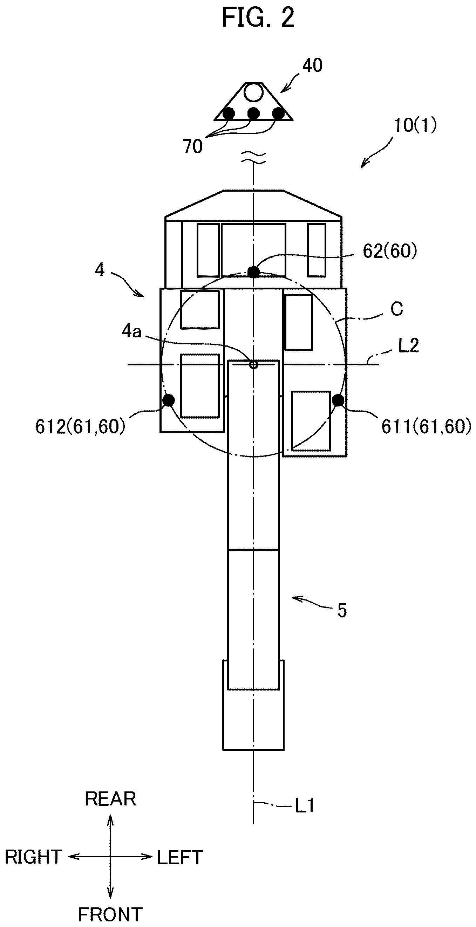

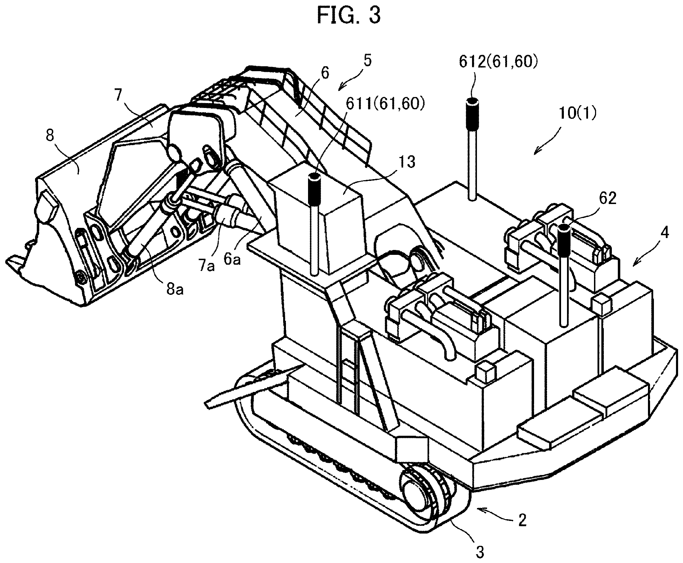

Fig. 1 is a side view illustrating a hydraulic excavator as a construction machine according to the embodiment, Fig. 2 is a plan view illustrating the hydraulic excavator, and Fig. 3 is a perspective view illustrating the hydraulic excavator. The hydraulic excavator 1 is a construction machine used for, for example, excavation work of earth and sand at a work site. Further, the hydraulic excavator 1 is configured to be remotely controllable by an operator in a remote control room (not illustrated) arranged at a position away from a position where the hydraulic excavator 1 is operated without having the operator on board.

As illustrated in the drawing, the hydraulic excavator 1 includes a machine body 10 including a lower traveling body 2, an upper rotating body 4, and a work device 5 attached to a front central portion of the upper rotating body 4. The lower traveling body 2 includes a crawler 3 driven by a hydraulic motor for traveling (not illustrated) as a drive device for causing the hydraulic excavator 1 to travel. The upper rotating body 4 is rotatably provided on the lower traveling body 2, and rotates by being driven by a hydraulic motor for rotating (not illustrated). A cab 13 on which the driver boards is provided in a front portion of the upper rotating body 4. Note that the cab 13 may be omitted. Further, a fuel tank, a machine room, a counterweight, and the like are provided in a rear portion of the upper rotating body 4. In the machine room, an engine, a hydraulic pump driven by the engine (both not illustrated), and the like are mounted. The hydraulic pump pressure-feeds hydraulic oil for operating each component of the hydraulic motor for traveling, the hydraulic motor for rotating, and the work device 5.

The work device 5 is a device that performs excavation work of earth and sand and the like. The work device 5 is attached to the front central portion of the upper rotating body 4, and extends along a straight line L1 (see Fig. 2) extending in the front-rear direction of the machine body 10 including a rotating center 4a of the upper rotating body 4 with respect to the lower traveling body 2. The work device 5 includes a boom 6 rotatably attached to the upper rotating body 4 in the up-down direction, an arm 7 rotatably attached to a distal end of the boom 6 in the up-down direction, and a bucket 8 rotatably attached to a distal end of the arm 7 in the up-down direction. Further, the work device 5 includes a boom cylinder 6a that drives the boom 6, an arm cylinder 7a that drives the arm 7, and a bucket cylinder 8a that drives the bucket 8.

### (Remote Control System)

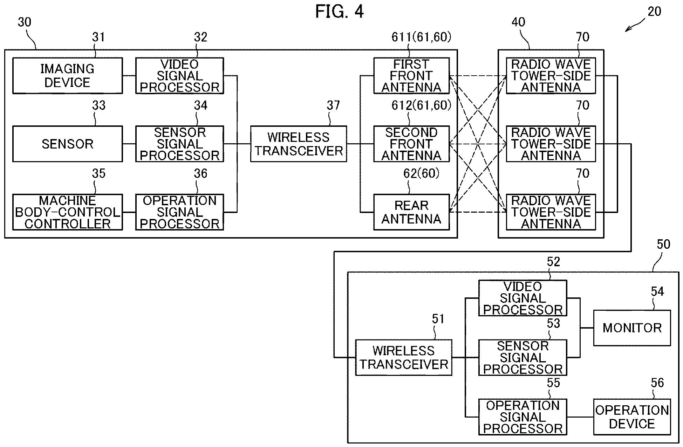

Fig. 4 is a schematic configuration diagram illustrating an example of a remote control system according to the embodiment. A remote control system 20 includes a machine body-side system 30, a radio wave tower 40, and a remote control room-side system 50, and is configured as a system for operating the hydraulic excavator 1 by remote control.

### (Machine Body-side System)

The machine body-side system 30 includes a plurality of imaging devices 31, a video signal processor 32, a plurality of sensors 33, a sensor signal processor 34, a machine body-control controller 35, an operation signal processing unit 36, a wireless transceiver 37, and a plurality of machine body-side antennas 60. Each component of the machine body-side system 30 is mounted on the machine body 10.

The plurality of imaging devices 31 includes devices that capture a video seen by the operator who performs remote control, and is attached to the machine body 10 so as to be able to capture a peripheral video including a work range and a travel range by the hydraulic excavator 1. An attachment place of each imaging device 31 is, for example, an inside of the cab, the lower traveling body 2, or the like. Each imaging device 31 outputs the captured video data to the video signal processor 32. The video signal processor 32 converts the video data captured by each imaging device 31 into a communication signal.

The plurality of sensors 33 includes sensors that detect information regarding various devices, operations, and the like of the hydraulic excavator 1 to be grasped by the operator in the remote control, and is attached to the hydraulic excavator 1. The plurality of sensors 33 outputs detection values to the sensor signal processor 34. The sensor signal processor 34 converts the video data captured by each imaging device 31 into a communication signal.

The machine body-control controller 35 inputs, via the operation signal processing unit 36, an operation signal that is an instruction for the remote control input by the operator in the remote control room-side system 50. The machine body-control controller 35 drives and controls various devices of the machine body 10 according to the input operation signal to control a traveling operation of the lower traveling body 2, a rotating operation of the upper rotating body 4, an operation of the work device 5, and the like. The operation signal processing unit 36 converts the instruction for the remote control input as the communication signal from the operator into an original operation signal and outputs the original operation signal to the machine body-control controller 35.

The wireless transceiver 37 receives the communication signal of the video data from the video signal processor 32 and the communication signal of the detection value of each sensor 33 from the sensor signal processor 34 as inputs and transmits the communication signals to the radio wave tower 40 via the plurality of machine body-side antennas 60. Further, the wireless transceiver 37 receives the communication signal of the instruction for the remote control from the radio wave tower 40 and outputs the communication signal to the operation signal processing unit 36 via the plurality of machine body-side antennas 60.

The plurality of machine body-side antennas 60 (a first front antenna 611, a second front antenna 612, and a rear antenna 62 to be described below) is parts for transmitting and receiving signals by radio waves to and from a plurality of radio wave tower-side antennas 70 (external antennas) provided in the radio wave tower 40, and is attached to the upper rotating body 4. The plurality of machine body-side antennas 60 transmits various communication signals output from the wireless transceiver 37 to the radio wave tower 40, and outputs various communication signals received from the radio wave tower 40 to the wireless transceiver 37. As illustrated in Fig. 2, three of the plurality of machine body-side antennas 60 are attached to the upper rotating body 4. Each machine body-side antenna 60 may be attached to the upper rotating body 4 by various methods, such as by being clamped by a clamp mechanism on a handrail portion or the like, by being provided with a fixing bracket, or by being fixed by welding. Note that each machine body-side antenna 60 is provided outside the operation range of the work device 5. Further, each machine body-side antenna 60 is favorably provided outside an imaging range of each imaging device 31 so as not to be included in a monitor 54 viewed by the operator who performs the remote control. Further, the machine body-side antennas 60 are favorably provided at the same height.

### (Radio Wave Tower)

The radio wave tower 40 is provided in the vicinity of the remote control room and includes the plurality of radio wave tower-side antennas 70. The plurality of radio wave tower-side antennas 70 is parts that transmit and receive signals by radio waves to and from the plurality of machine body-side antennas 60. The plurality of radio wave tower-side antennas 70 outputs various communication signals received from the plurality of machine body-side antennas 60 to the remote control room-side system 50, and transmits various signals output from the remote control room-side system 50 to the plurality of machine body-side antennas 60. The radio wave tower 40 is provided with a plurality of (three in the present embodiment) radio wave tower-side antennas 70 so as to have the same number as the plurality of machine body-side antennas 60.

As described above, the remote control system 20 according to the present embodiment is provided with the plurality of antennas in the machine body 10 and in the radio wave tower 40, thereby enabling communication using multiple input multiple output (MIMO) as a communication method. In MIMO, a communication speed (throughput) can be improved by simultaneously transferring divided data. Note that the plurality of machine body-side antennas 60 may be provided more than the plurality of radio wave tower-side antennas 70, or the plurality of radio wave tower-side antennas 70 may be provided more than the plurality of machine body-side antennas 60. Furthermore, a plurality of the radio wave towers 40 including the plurality of radio wave tower-side antennas 70 may be provided at positions separated from each other. Further, the remote control system 20 is not limited to one using MIMO, and may be one in which at least three machine body-side antennas 60 are provided in the machine body 10, and at least one radio wave tower-side antenna 70 is provided.

### (Remote Control Room-side System)

The remote control room-side system 50 includes a wireless transceiver 51, a video signal processor 52, a sensor signal processor 53, the monitor 54, an operation signal processor 55, and an operation device 56. Each component of the remote control room-side system 50 is provided in the remote control room (not illustrated).

The wireless transceiver 51 is connected to the plurality of radio wave tower-side antennas 70 of the radio wave tower 40 in a wired or wireless manner so as to communicate with each other. The wireless transceiver 51 receives the communication signal of the video data and the communication signal of the detection value of each of the sensors 33 via the plurality of radio wave tower-side antennas 70.

Further, the wireless transceiver 51 receives the operation signal of the remote control input by the operation device 56 and converted into the communication signal by the operation signal processor 55, and transmits the operation signal via the plurality of radio wave tower-side antennas 70.

The video signal processor 52 converts the communication signal of the video data into original video data, and outputs the original video data to the monitor 54. Further, the sensor signal processor 53 converts the communication signal of the detection value of each of the sensors 33 into an original detection value and outputs the original detection value to the monitor 54. The monitor 54 is a display device arranged at a position where the operator can visually recognize the monitor in the remote control room, and displays the input video data and the detection value of each sensor 33. Note that the monitor 54 may separately display the video data and the detection value of each sensor 33, may switch display of the video data and the detection value on one monitor 54, or may display the video data and the detection value on a divided screen. The operation signal processor 55 converts the operation signal of the remote control input by the operation device 56 into a communication signal and outputs the communication signal to the wireless transceiver 37. The operation device 56 is a terminal for the remote control handled by the operator, and includes a plurality of operation levers and the like for causing the hydraulic excavator 1 to execute various operations.

### (Arrangement Configuration of Machine Body-side Antenna)

In the hydraulic excavator 1 and the remote control system 20 configured as described above, the plurality of machine body-side antennas 60 is attached to the upper rotating body 4, and so-called shadowing may occur in which radio waves are blocked by the work device 5 and cannot be transmitted and received. In a case where the machine body-side antenna 60 incapable of transmitting and receiving radio waves is generated, division processing is performed so as to transfer data using only the remaining machine body-side antennas 60, but in order to improve stability of communication and communication speed, it is favorable that the radio waves are not blocked as much as possible. Therefore, the plurality of machine body-side antennas 60 is attached to the upper rotating body 4 in the arrangement configuration described below.

As illustrated in Fig. 2, the plurality of machine body-side antennas 60 includes two front antennas 61 and the rear antenna 62. The front antennas 61 are provided ahead of the rotating center 4a of the upper rotating body 4 in the front-rear direction of the machine body 10. Further, the front antennas 61 are provided one on each of right and left sides so as to sandwich the rotating center 4a of the upper rotating body 4 and the work device 5 in the right-left direction of the machine body 10. That is, the front antenna 61 includes the first front antenna 611 provided on the left side with respect to the rotating center 4a and the work device 5, and the second front antenna 612 provided on the right side with respect to the rotating center 4a and the work device 5. The rotating center 4a of the upper rotating body 4 and a central position of the work device 5 in the right-left direction may be separated from each other. In this case, the front antennas 61 may be provided one on each of the right and left sides so as to sandwich the work device 5 in the right-left direction of the machine body 10. The first front antenna 611 and the second front antenna 612 are arranged side by side along the right-left direction and arranged at the same position in the front-rear direction.

Meanwhile, the rear antenna 62 is provided behind the rotating center 4a in the front-rear direction (behind a straight line L2 extending in the right-left direction passing through the rotating center 4a in the front-rear direction). Further, the rear antenna 62 is arranged behind a rear end of the work device 5 so as to overlap with the work device 5 as viewed in the front-rear direction. More specifically, the rear antenna 62 is provided side by side with the work device 5 on the straight line L1 extending along the front-rear direction so as to include the rotating center 4a. Note that the rear antenna 62 may be arranged at least behind the rear end of the work device 5 so as to overlap with the work device 5 as viewed in the front-rear direction.

Further, the machine body-side antennas 60 are favorably arranged at predetermined intervals in order to prevent radio wave interference with each other. In the present embodiment, the machine body-side antennas are arranged at equal intervals along a concentric circle C (one-dot chain line circle in the drawing) centered on the rotating center 4a.

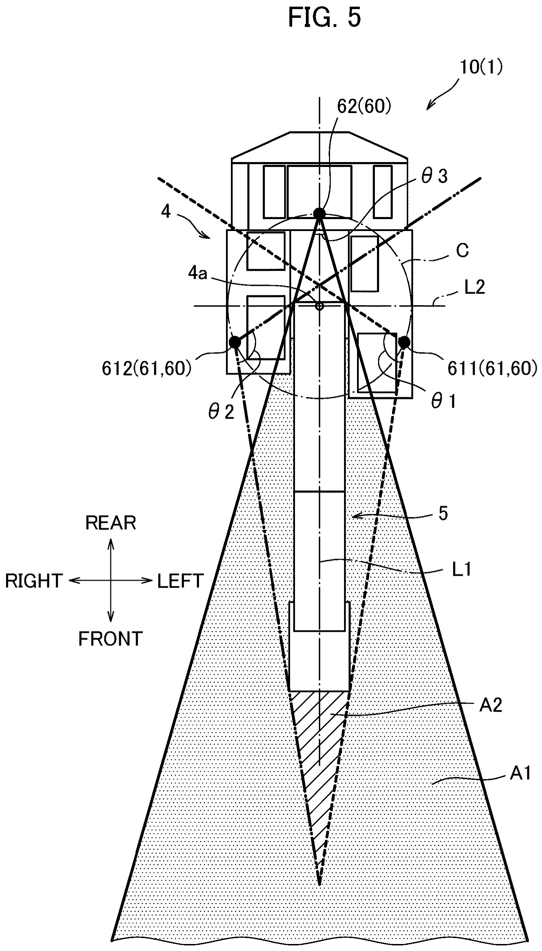

Fig. 5 is an explanatory view illustrating regions of blind angles of radio waves transmitted and received by the plurality of machine body-side antennas 60. In Fig. 5, a range surrounded by the broken line indicates a blind angle θ1 of the first front antenna 611 with respect to the work device 5, a range surrounded by the two-dot chain line indicates a blind angle θ2 of the second front antenna 612 with respect to the work device 5, and a range surrounded by the solid line indicates a blind angle θ3 of the rear antenna 62 with respect to the work device 5. Now, a range in which any two of the blind angle θ1, the blind angle θ2, and the blind angle θ3 overlap, that is, a range in which any two of the first front antenna 611, the second front antenna 612, and the rear antenna 62 cannot transmit and receive radio waves is defined as a first region A1 (the range with the dot pattern). Further, a range in which all of the blind angle θ1, the blind angle θ2, and the blind angle θ3 overlap, that is, a range in which radio waves cannot be transmitted and received by all of the first front antenna 611, the second front antenna 612, and the rear antenna 62 is defined as a second region A2 (the range with the diagonal line). Note that illustration of the drawings does not include portions of the first region A1 and the second region A2, which overlap with the machine body 10.

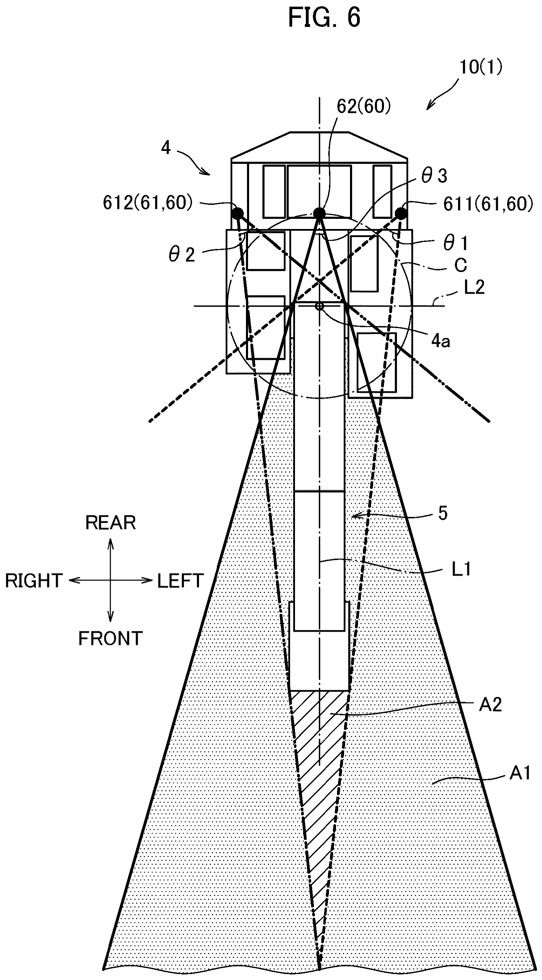

In contrast, Fig. 6 is an explanatory diagram illustrating regions of blind angles of radio waves transmitted and received by the plurality of machine body-side antennas 60 in a case where the front antenna 61 is arranged behind the rotating center 4a as a comparative example. As illustrated in the drawing, if the first front antenna 611 and the second front antenna 612 are arranged behind the rotating center 4a, there is a possibility that radio waves transmitted and received by the first front antenna 611 and the second front antenna 612 are blocked by parts such as structures and devices other than the work device 5 on the upper rotating body 4. Further, although each of the blind angles θ1 and θ2 is a more acute angle than that in the case illustrated in Fig. 5, a length of the second region A2 is extended.

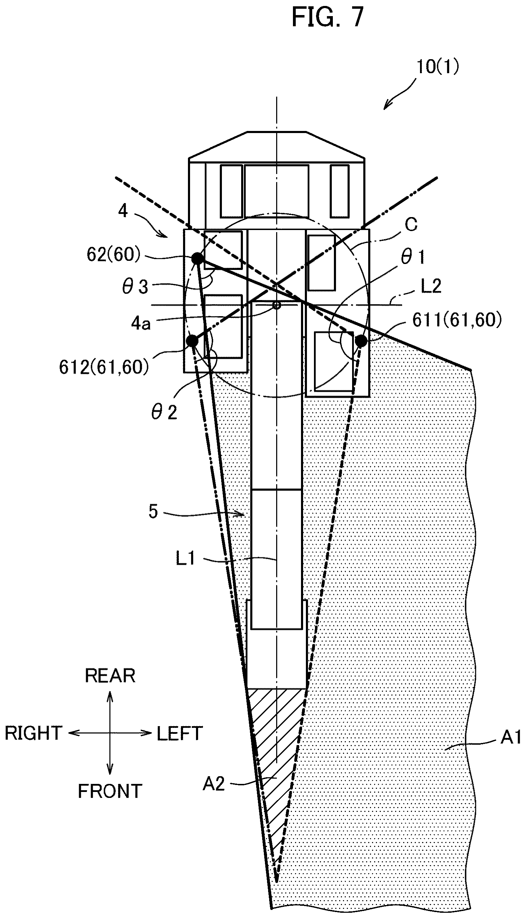

Note that the rear antenna 62 is not limited to be provided at the position illustrated in Fig. 5. Fig. 7 is an explanatory diagram illustrating regions of blind angles of radio waves transmitted and received by the plurality of machine body-side antennas 60 in a case where the rear antenna 62 is shifted in the right-left direction as compared with the example of Fig. 5 as a modification. If the rear antenna 62 is shifted in the right-left direction with respect to the work device 5, a range in which no radio waves can be transmitted and received by the rear antenna 62 becomes larger on one side in the right-left direction (here, the left side) than in the case illustrated in Fig. 5. However, the second region A2, that is, the range in which it is difficult for all the machine body-side antennas 60 to transmit and receive radio waves can be kept small as in Fig. 5.

In the plurality of machine body-side antennas 60 of the present embodiment, each front antenna 61 is provided ahead of the rotating center 4a, as illustrated in Figs. 5 and 7. Therefore, parts such as structures and devices other than the work device 5 are arranged as little as possible in front of the front antenna 61 on the upper rotating body 4, and it is possible to suppress blockage by these parts, of the radio waves transmitted and received by each machine body-side antenna 60. Further, since the front antennas 61 are provided on the right and left sides so as to sandwich the rotating center 4a and the work device 5, it is possible to secure the range in which radio waves can be transmitted and received on both sides in the right-left direction with respect to the work device 5. Furthermore, with these configurations, it is possible to suppress the second region A2 from becoming wider as compared with the case illustrated in Fig. 6. Further, since the rear antenna 62 is provided behind the rotating center 4a, even in the case where the radio wave tower 40 is located on the rear side of the machine body 10, it is possible to secure communication between at least the rear antenna 62 and the plurality of radio wave tower-side antennas 70. Therefore, according to the hydraulic excavator 1 (construction machine) and the remote control system 20 of the embodiment, it is possible to more favorably secure the stability of communication regardless of the posture of the machine body 10 and the work device 5. As a result, it is possible to stably perform the remote control of the hydraulic excavator 1.

Further, since the rear antenna 62 is provided so as to overlap with the work device 5 as viewed from the front-rear direction, it is possible to suppress the first region A1 from becoming large on one side in the right-left direction as illustrated in Fig. 5. Further, the number of the plurality of machine body-side antennas 60 is three, so that it is possible to suppress an increase in the number of components. Further, it is possible to suppress occurrence of radio wave interference and excessive data processing related to communication due to providing the machine body-side antennas 60 more than necessary.

Further, since the plurality of machine body-side antennas 60 is arranged along the concentric circle C of the rotating center 4a, it is possible to equalize the distances between each machine body-side antenna 60 and the plurality of radio wave tower-side antennas 70 regardless of the direction of the upper rotating body 4. As a result, it is possible to further stabilize the communication between the plurality of machine body-side antennas 60 and the radio wave tower-side antennas 70.

Further, high-speed communication becomes possible by using MIMO as a communication method, and even if the machine body-side antenna 60 also rotates with the rotating operation of the upper rotating body 4, occurrence of so-called fading in which the communication speed (throughput) fluctuates is suppressed. Then, as described above, by configuring the plurality of machine body-side antennas 60 such that the number of machine body-side antennas with blocked radio waves becomes as small as possible, it is possible to secure the number of machine body-side antennas 60 capable of transmitting and receiving radio waves, and to more favorably suppress fluctuations in the communication speed.

The description of the embodiment is completed as above, but aspects of the present invention are not limited to this embodiment. For example, in the present embodiment, the hydraulic excavator 1 has been exemplified as the construction machine, but the present embodiment may be applied to another construction machine as long as the construction machine includes the lower traveling body, the upper rotating body, the work device, and the plurality of machine body-side antennas, and performs various works while communicating between external antennas and the plurality of machine body-side antennas. Note that information communicated between the external antenna and the plurality of machine body-side antennas is not limited to the signals for the remote control, and may be various types of information.

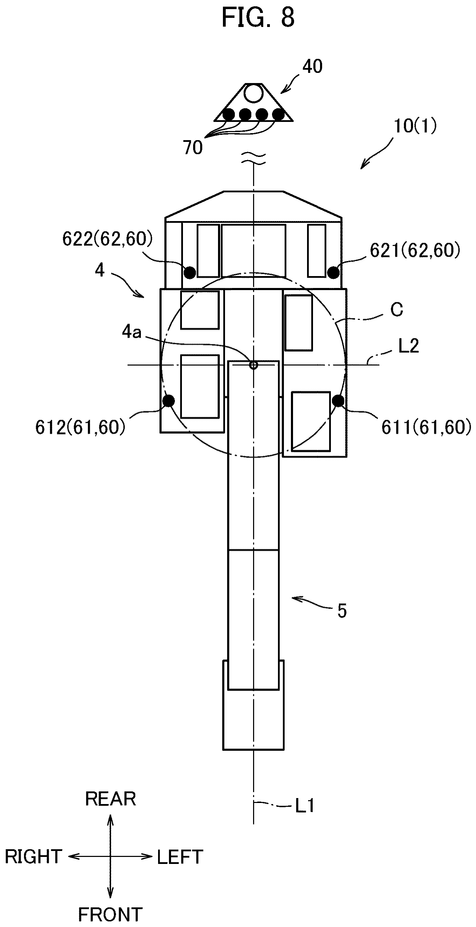

Further, the number of the plurality of machine body-side antennas 60 is not limited to that described in the embodiment. Fig. 8 is an explanatory view illustrating an arrangement configuration example in a case where the number of the machine body-side antennas 60 is four. As illustrated, the machine body-side antennas 60 may include two front antennas 61 and two rear antennas 62. Similarly to the example illustrated in Fig. 5, the front antenna 61 includes the first front antenna 611 and the second front antenna 612. Meanwhile, the rear antenna 62 includes a first rear antenna 621 provided on a left side with respect to the straight line L1 including the rotating center 4a and a second rear antenna 622 provided on a right side with respect to the straight line L1.

As described above, by providing the rear antennas 62 one on each of the right and left sides so as to sandwich the straight line L1 in the right-left direction behind the rotating center 4a in the front-rear direction in addition to the front antennas 61, it is possible to further widen the range in which the two rear antennas 62 can transmit and receive radio waves. In this case as well, the plurality of machine body-side antennas 60 is more favorably arranged along the concentric circle C of the rotating center 4a. Further, the two rear antennas 62 may be provided at positions overlapping with the work device 5 as viewed from the front-rear direction as long as the two rear antennas 62 are provided one on each of the right and left sides so as to sandwich the straight line L1 in the right-left direction. Further, as illustrated in Fig. 8, it is favorable that four radio wave tower-side antennas 70 are provided similarly to the machine body-side antennas 60.

As described above, the number and arrangement positions of the plurality of machine body-side antennas 60 may be appropriately adjusted, and for example, three or more front antennas 61 may be provided in addition to the configuration exemplified above. Note that, as described above, the number and arrangement positions of the machine body-side antennas 60 are favorably set to prevent mutual radio wave interference, and the machine body-side antennas 60 are favorably set outside the imaging range of the imaging device 31. Further, the front antenna 61 is favorably arranged on a front side of the upper rotating body 4 and on an outer side in the right-left direction as much as possible in order to suppress blockage of the front antenna by a shielding object on the upper rotating body 4.

Further, the rear antenna 62 is favorably arranged on the rear side of the upper rotating body 4 as much as possible in order to narrow the blind angle θ3 while suppressing blockage of the rear antenna by a shielding object on the upper rotating body 4,

Further, each machine body-side antenna 60 may be attached to an arm extending from the upper rotating body 4 in order to realize the above-described favorable arrangement.

### Explanation of Reference Signs

- 1: Hydraulic excavator (construction machine)
- 2: Lower traveling body
- 4: Upper rotating body
- 4a: Rotating center
- 5: Work device
- 10: Machine body
- 20: Remote control system
- 30: Machine body-side system
- 50: Remote control room-side system
- 60: Plurality of machine body-side antennas
- 61: Front antenna
- 611: First front antenna
- 612: Second front antenna
- 62: Rear antenna
- 621: First rear antenna
- 622: Second rear antenna
- 70: Plurality of radio wave tower-side antennas (external antennas)
- A1: First region
- A2: Second region
- C: Concentric circle
- L1, L2: Straight line
- *θ*1, θ2, θ3: Blind angle

## Claims

1. A construction machine comprising: a machine body including a lower traveling body, an upper rotating body capable of rotating on the lower traveling body, and a work device attached to a front central portion of the upper rotating body; and a plurality of machine body-side antennas attached to the upper rotating body, and the construction machine being configured to communicate between an external antenna arranged outside the machine body and the plurality of machine body-side antennas, wherein
the plurality of machine body-side antennas includes
front antennas provided at least one on each of right and left sides so as to sandwich the work device in a right-left direction of the machine body ahead of a rotating center of the upper rotating body in a front-rear direction of the machine body, and
at least one rear antenna provided behind the rotating center in the front-rear direction.

2. The construction machine according to claim 1, wherein
three of the plurality of machine body-side antennas are attached to the upper rotating body,
the front antennas are provided one on each of the right and left sides so as to sandwich the work device in the right-left direction, and
the rear antenna is arranged so as to overlap with the work device as viewed in the front-rear direction.

3. The construction machine according to claim 1, wherein the plurality of machine body-side antennas is arranged along a concentric circle of the rotating center in the upper rotating body.

4. The construction machine according to claim 1, wherein
four of the plurality of machine body-side antennas are attached to the upper rotating body,
the front antennas are provided one on each of the right and left sides so as to sandwich the work device in the right-left direction, and
the rear antennas are provided one on each of the right and left sides in the right-left direction so as to sandwich a straight line passing through the rotating center and extending in the front-rear direction.

5. A remote control system comprising:
the construction machine according to any one of claims 1 to 4; and
an external antenna arranged outside the machine body,
wherein
the external antenna and the plurality of machine body-side antennas communicate with each other to perform remote control of the construction machine.
